# EUROPEAN PATENT SPECIFICATION

(11) **EP 0 522 767 B1**
(45) Date of publication and mention of the grant of the patent: **18.12.1996**
(21) Application number: 92306008.1
(22) Date of filing: 30.06.1992
(51) Int. Cl.: C08G 65/48, C08F 8/30, C08K 5/17

(54) **Method for preparing reactive triazine-capped aromatic polymers**
Methode zur Darstellung reaktiver aromatischer Polymere mit Triazin-Endgruppen
Méthode pour la préparation de polymères aromatiques, réactifs, coiffés par une triazine

(30) Priority: 05.07.1991 US 726104
(43) Date of publication of application: 13.01.1993
(73) Proprietor: GENERAL ELECTRIC COMPANY, Schenectady, NY 12345 (US)
(72) Inventor: Brown, Sterling Bruce, Schenectady, New York 12309 (US); Walles, Eric Wilhelm, Lanesborough MA 01237 (US)
(74) Representative: Szary, Anne Catherine

(56) References cited:
- EP-A- 0 347 539

## Description

This invention relates to the preparation of reactively capped aromatic polymers, especially polyphenylene ethers. More particularly, it relates to an improved method for their preparation in a mixed aqueous-organic system.

There has been considerable interest in recent years in developing methods for insertion of reactive groups into polymers, in order to make them capable of forming copolymers with other polymers normally incompatible therewith. For example, normally incompatible blends of polyphenylene ethers with polyamides, polyesters or olefin polymers can be compatibilized by incorporation therein of a copolymer of the polyphenylene ether with the other polymer (in the case of olefin polymers, with a functionalized derivative thereof). Such copolymers may be formed by the reaction of groups in the other polymer such as carboxylic acid or amine groups with moieties reactive therewith in the polyphenylene ether.

Various patent applications disclose functionalized aromatic polymers capable of forming such copolymer-containing compositions. For example, copending, commonly owned application Serial No. 07/351,905 describes the preparation of epoxytriazine-capped polyphenylene ethers by the reaction of a polyphenylene ether with an epoxy-substituted chlorotriazine. Said reaction may be conducted in a mixed aqueous-organic system using an inorganic base such as sodium hydroxide, or in a homogeneous organic system using an amine such as pyridine. A second copending, commonly owned application, Serial No. 07/654,443, discloses similar capping reactions involving triazines containing reactive substituents such as alkyl groups substituted with halo or dialkylphosphato moieties.

The known methods for preparing these capped polymers, while effective, suffer from certain disadvantages. For example, the homogeneous method employing pyridine is accompanied by side reactions between by-product hydrogen chloride and epoxy groups or other acid-reactive groups, resulting in loss of at least a portion of the functionality.

In procedures utilizing an inorganic base such as sodium hydroxide, the capped product contains relatively high levels of residual sodium which may adversely effect the particle size of the product isolated from the capping reaction. When amines other than the relatively costly and toxic pyridine are employed, there is frequently a considerable decrease in yield of the capped polymer.

The present invention provides a method for introducing reactive triazine groups into hydroxy group-containing aromatic polymers in relatively high yield. Said method employs a mixed aqueous-organic system and at least one amine, which may be an amine which is readily available and-relatively non-toxic.

Therefore, the invention is a method for preparing a reactive triazine-capped polymer which comprises intimately contacting, under reactive conditions, at least one hydroxy group-containing aromatic polymer with at least one chlorotriazine containing reactive groups in the presence of water, a substantially non-polar organic liquid, a reaction-promoting amount of a phase transfer catalyst and at least one tertiary amine selected from the group consisting of:
(A) nitrogen-heterocyclic aromatic and bicycloaliphatic amines;
(B) trialkylamines of the formula 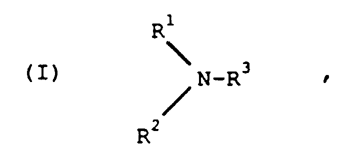 wherein R¹ is an unsubstituted or substituted C₁₋₆ primary alkyl radical, R² is an unsubstituted or substituted C₁₋₁₀ alkyl radical and R³ is an unsubstituted or substituted C₁₋₁₀ primary or secondary alkyl radical; and
(C) heterocyclic amines of the formula 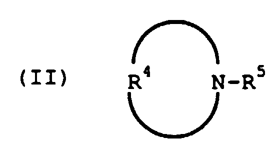 wherein R⁴ is a divalent aliphatic hydrocarbon or aza- or oxahydrocarbon radical and R⁵ is an unsubstituted or substituted C₁₋₆ primary or secondary alkyl radical;
the amount of water employed, based on aromatic polymer, being 2-30% by weight.

The polymers which may be capped by the method of this invention include all aromatic polymers containing hydroxy groups. Said hydroxy groups may be present as end groups or as substituents on aromatic rings in the polymer chain or attached thereto. Thus, the term "capping" is employed in a very broad sense which includes reaction at positions along the polymer chain.

Suitable aromatic polymers include polyphenylene ethers and hydroxylated styrene polymers. The polyphenylene ethers, which are preferred, are known polymers comprising a plurality of structural units containing the formula 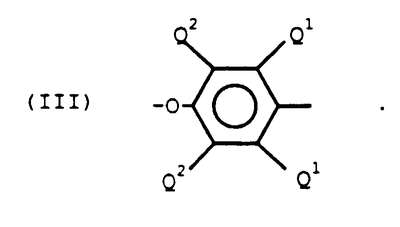 In each of said units independently, each Q¹ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each Q¹ is alkyl or phenyl, especially C₁₋₄ alkyl, and each Q² is hydrogen. Suitable polyphenylene ethers are disclosed in a large number of patents.

Both homopolymer and copolymer polyphenylene ethers are included. Suitable homopolymers are those containing, for example, 2,6-dimethyl-1,4-phenylene ether units. Suitable copolymers include random copolymers containing such units in combination with (for example) 2,3,6-trimethyl-l,4-phenylene ether units. Many suitable random copolymers, as well as homopolymers, are disclosed in the patent literature.

Also included are polyphenylene ethers containing moieties which modify properties such as molecular weight, melt viscosity and/or impact strength. Such polymers are described in the patent literature and may be prepared by grafting onto the polyphenylene ether in known manner such vinyl monomers as acrylonitrile and vinylaromatic compounds (e.g., styrene), or such polymers as polystyrenes and elastomers. The product typically contains both grafted and ungrafted moieties. Other suitable polymers are the coupled polyphenylene ethers in which the coupling agent is reacted in known manner with the hydroxy groups of two polyphenylene ether chains to produce a higher molecular weight polymer containing the reaction product of the hydroxy groups and the coupling agent, provided substantial proportions of free hydroxy groups remain present. Illustrative coupling agents are low molecular weight polycarbonates, quinones, heterocycles and formals.

The polyphenylene ether generally has a number average molecular weight within the range of 3,000-40,000 and a weight average molecular weight within the range of 20,000-80,000, as determined by gel permeation chromatography. Its intrinsic viscosity is most often in the range of 0.35-0.6 dl./g., as measured in chloroform at 25°C.

The polyphenylene ethers are typically prepared by the oxidative coupling of at least one corresponding monohydroxyaromatic compound. Particularly useful and readily available monohydroxyaromatic compounds are 2,6-xylenol (wherein each Q¹ is methyl and each Q² is hydrogen), whereupon the polymer may be characterized as a poly(2,6-dimethyl-1,4-phenylene ether), and 2,3,6-trimethylphenol (wherein each Q¹ and one Q² is methyl and the other Q² is hydrogen).

A variety of catalyst systems are known for the preparation of polyphenylene ethers by oxidative coupling. There is no particular limitation as to catalyst choice and any of the known catalysts can be used. For the most part, they contain at least one heavy metal compound such as a copper, manganese or cobalt compound, usually in combination with various other materials.

A first class of preferred catalyst systems consists of those containing a copper compound. Such catalysts are disclosed, for example, in U.S. Patents 3,306,874, 3,306,875, 3,914,266 and 4,028,341. They are usually combinations of cuprous or cupric ions, halide (i.e., chloride, bromide or iodide) ions and at least one amine. The catalyst systems which are often preferred contain more than one amine, and at least one of said amines is usually dimethyl-n-butylamine.

Catalyst systems containing manganese compounds constitute a second preferred class. They are generally alkaline systems in which divalent manganese is combined with such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, ω-hydroxyoximes (monomeric and polymeric), o-hydroxyaryl oximes and β-diketones. Also useful are known cobalt-containing catalyst systems. Suitable manganese and cobalt-containing catalyst systems for polyphenylene ether preparation are known in the art by reason of disclosure in numerous patents and publications.

Particularly useful polyphenylene ethers for the purposes of this invention are those which comprise molecules having at least one of the end groups of the formulas 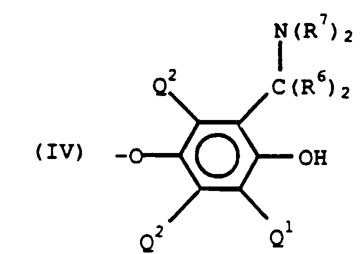 and 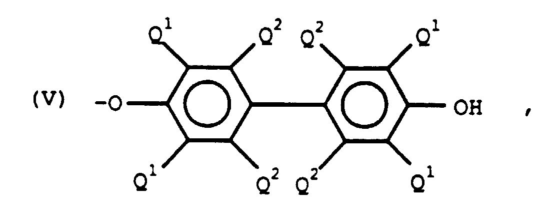 wherein Q¹ and Q² are as previously defined; each R⁶ is independently hydrogen or alkyl, with the proviso that the total number of carbon atoms in both R⁶ radicals is 6 or less; and each R⁷ is independently hydrogen or a C₁₋₆ primary alkyl radical. Preferably, each R⁶ is hydrogen and each R⁷ is alkyl, especially methyl or n-butyl.

Polymers containing the aminoalkyl-substituted end groups of formula IV may be obtained by incorporating an appropriate primary or secondary monoamine as one of the constituents of the oxidative coupling reaction mixture, especially when a copper- or manganese-containing catalyst is used. Such amines, especially the dialkylamines and preferably di-n-butylamine and dimethylamine, frequently become chemically bound to the polyphenylene ether, most often by replacing one of the α-hydrogen atoms on one or more Q¹ radicals. The principal site of reaction is the Q¹ radical adjacent to the hydroxy groups on the terminal unit of the polymer chain. During further processing and/or blending,the aminoalkyl-substituted end groups may undergo various reactions, probably involving a quinone methide-type intermediate of the formula 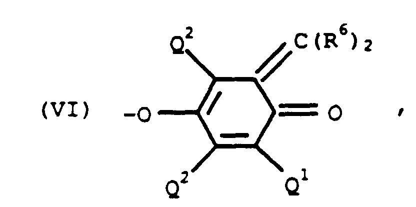 with numerous beneficial effects often including an increase in impact strength and compatibilization with other blend components. Reference is made to U.S. Patents 4,054,553, 4,092,294, 4,477,649, 4,477,651 and 4,517,341, the disclosures of which are incorporated by reference herein.

Polymers with 4-hydroxybiphenyl end groups of formula V are typically obtained from reaction mixtures in which a by-product diphenoquinone of the formula 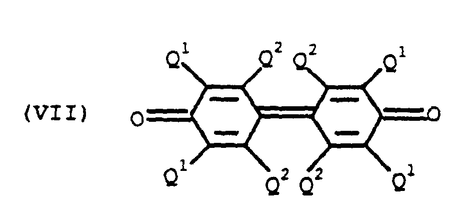 is present, especially in a copper-halide-secondary or tertiary amine system. In this regard, the disclosure of U.S. Patent 4,477,649 is again pertinent as are those of U.S. 4,234,706 and 4,482,697, which are also incorporated by reference herein. In mixtures of this type, the diphenoquinone is ultimately incorporated into the polymer in substantial proportions, largely as an end group.

In many polyphenylene ethers obtained under the above-described conditions, a substantial proportion of the polymer molecules, typically constituting as much as about 90% by weight the polymer, contain end groups having one or frequently both of formulas IV and V. It should be understood, however, that other end groups may be present and that the invention in its broadest sense may not be dependent on the molecular structures of the polyphenylene ether end groups.

It will be apparent to those skilled in the art from the foregoing that the polyphenylene ethers contemplated for use in the present invention include all those presently known, irrespective of variations in structural units or ancillary chemical features.

A wide variety of chlorotriazines containing reactive groups may be employed in the method of the invention. They include compounds of the formula 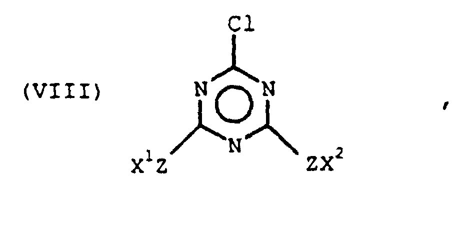 wherein Z is oxygen or sulfur, X¹ is alkyl, cycloalkyl or an aromatic radical, X² is an aromatic radical or a glycidyl group or a group having the formula 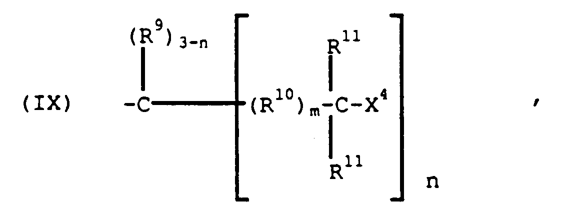 wherein X⁴ is chlorine, bromine or has the formula 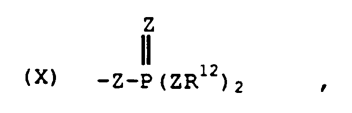 wherein Z is as previously defined and each R¹² is a C₁₋₃₀ primary or secondary alkyl, cycloalkyl, aromatic or aralkyl radical or both R¹² radicals together with the P and Z atoms form a cyclic structure,especially dialkylphosphate; each R⁹ is independently hydrogen, C₁₋₄ primary or secondary alkyl; R¹⁰ is a C₁₋₃ alkylene radical which is unsubstituted or is substituted with moieties selected from the group consisting of C₁₋₄ primary and secondary alkyl radicals; each R¹¹ is independently R⁹ or X⁴; m is 0 or 1 and n is 1-3.

Illustrative of the chlorotriazines which may be employed in the present invention are :
2-chloro-4,6-diphenoxytriazine,
2-chloro-4,6-bis(2,4,6-trimethylphenoxy)triazine,
2-chloro-4,6-diglycidoxy-1 ,3,5-triazine,
2-chloro-4-(n-butoxy)-6-glycidoxy-1,3,5-triazine,
2-chloro-4-(2,4,6-trimethylphenoxy)-6-glycidoxy-1,3,5-triazine (hereinafter "MGCC"),
2-chloro-4-(2-chloroethoxy)-6-(2,4,6-trimethylphenoxy)-1,3,5-triazine,
2-chloro-4-(2-bromoethoxy)-6-(2,4,6-trimethylphenoxy)-1,3,5-triazine,
2-chloro-4-(2-diethylphosphatoethoxy)-6-(2,4,6-trimethylphenoxy)-1,3,5-triazine,
2-chloro-4-(2-di-n-butylphosphatoethoxy)-6-(2,4,6-trimethylphenoxy)-1,3,5-triazine (hereinafter "PMCC"), and
2-chloro-4-(2-di-n-butylphosphatoethoxy)-6-(2,6-xylenoxy)-1,3,5-triazine.
Such compounds may be prepared by the reaction of cyanuric chloride (i.e., 2,4,6-trichlorotriazine) with the hydroxy or thio compound(s) corresponding to the substituent(s) on the heterocyclic ring.

Also employed in the method of this invention are water, a substantially non-polar organic liquid and a phase transfer catalyst. Suitable organic liquids include chlorinated aliphatic hydrocarbons such as methylene chloride and chloroform (although methylene chloride should not be used with polyphenylene ethers since it forms a complex therewith); aromatic hydrocarbons such as toluene and xylene; and chlorinated aromatic hydrocarbons such as chlorobenzene and o-dichlorobenzene. The aromatic hydrocarbons and especially toluene are usually preferred.

Any phase transfer catalyst which is stable and effective under the prevailing reaction conditions may be used; those skilled in the art will readily perceive which ones are suitable. Particularly preferred are the tetraalkylammonium chlorides wherein at least two alkyl groups per molecule, preferably two or three, contain about 4-20 carbon atoms.

The final reagent employed in the method is at least one tertiary amine. The useful amines fall into three classes, class A consisting of nitrogen-heterocyclic aromatic and bicycloaliphatic amines such as pyridine, 4-dimethylaminopyridine, N-methylpyrrole, N-ethylpyrrole, quinoline, isoquinoline, N-methylimidazole, indole, 1,5-diazabicyclo[4.3.0]non-5-ene and 1,8-diazabicyclo[5.4.0]undec-7-ene.

Class B consists of aliphatic amines of formula I, in which R¹⁻³ are as previously defined. In the preferred amines of this type, all of R¹⁻³ are primary alkyl radicals. Illustrative amines within this class are dimethyl-n-butylamine, methyl-di-n-octylamine and triethylamine.

Class C consists of heterocyclic amines of formula II, in which R⁴ is a divalent aliphatic hydrocarbon radical or aza- or oxohydrocarbon radical and R⁵ is a radical of the type previously defined for R³. Such amines include N-methylpiperidine, N-methylmorpholine, N,N'-dimethylpiperazine, N-methylpyrrolidine and the like. The tertiary amines which are frequently preferred for use in the invention are those of class B. They include trimethylamine, triethylamine, tri-n-butylamine, di-n-butylmethylamine, diisopropylethylamine, dimethyl-n-butylamine (hereinafter "DMBA"), tetraethylethylenediamine, triethanolamine and dimethylethanolamine. Particularly preferred, by reason of its availability and particular effectiveness, is DMBA. As discussed hereinabove, it is frequently present in catalysts for the preparation of polyphenylene ethers by oxidative coupling of hydroxyaromatic compounds such as 2,6-xylenol, and it usually remains in the polyphenylene ether after preparation.

The method of this invention requires intimate contact, most often involving vigorous stirring or other agitation, between the aromatic polymer, chlorotriazine and other reagents under reactive conditions. Such conditions usually include temperatures in the range of 20-100° and preferably 40-80°C, and the employment of 0.5-2.0% by weight phase transfer catalyst, based on aromatic polymer.

Water is employed in the amount of 2-30% and preferably 5-25% by weight, based on aromatic polymer. The amount of organic liquid is not critical but is most often 2-3 ml. per gram of aromatic polymer.

The ratio of equivalents of chlorotriazine to polyphenylene ether (based on non-hydrogen bonded hydroxy groups in the polyphenylene ether) is at least 1.5:1. Of course, it may sometimes be advantageous to employ higher proportions of chlorotriazine (e.g, ratios up to 4.25:1) in order to maximize the yield of the capped product.

The proportion of amine employed is generally 1.5-3.5 equivalents per equivalent of aromatic polymer. (For the purposes of this invention, the equivalent weight of an amine is its molecular weight divided by the number of amino nitrogen atoms therein, except in the case of 4-dimethylaminopyridine and analogous compounds which behave chemically as though only one amino group is present.) As previously noted, some of said amine as well as some water is frequently present in the polymer as a result of its preparation. When this is the case. it is only necessary to add further water and/or amine and/or phase transfer catalyst in the amount necessary to bring the total content thereof to the desired level. The method of the invention is particularly advantageous by reason of its employment of amines in routine use in the preparation of polyphenylene ethers.

Under the preferred conditions described hereinabove, capping of the aromatic polymer is frequently very fast. It often reaches completion in the time required to mix the reactants. This is particularly true when a polyphenylene ether is being capped.

It is believed that the advantageous results afforded by the method of this invention are attributable to a reaction of the chlorotriazine with the tertiary amine to form a triazine-substituted quaternary ammonium chloride, which is thought to be an essential intermediate in the capping process described herein. Evidence for the formation of such a salt includes the disappearance of MGCC from the liquid chromatograph of the product obtained by treating MGCC with DMBA in toluene solution in the absence of water.

Addition of said solution to a solution of sodium salt of polyphenylene ether and phase transfer catalyst in toluene does not, however, afford the desired capped polyphenylene ether. It is believed that this is the result of dealkylation of the quaternary ammonium salt, with loss of an alkyl group to form a tertiary amine, prior to reaction of the triazine moiety thereon with the polyphenylene ether salt. When water is present, a substantial proportion of the quatemary ammonium salt apparently migrates to the aqueous phase before dealkylation can occur, and is available for use in the capping process.

This hypothesis also explains the effectiveness of the capping reaction in an all-organic medium when pyridine is employed as the amine. The resulting quaternary ammonium salt contains no alkyl groups (the amine nitrogen atom being part of an aromatic ring system) and thus cannot be dealkylated. It is not necessary, therefore, for water to be present to suppress dealkylation in such instances, although the presence of water may be advantageous.

### Examples 1-4

Solutions of various amounts of DMBA in 50 ml. of toluene were combined with water (41 grams in Examples 1-3, 82 grams in Example 4) and various amounts of MGCC, the latter being added as a 0.96 M solution in toluene. The resulting mixtures were stirred vigorously for 2 minutes and were then added at 70-75°C, in a nitrogen atmosphere, to solutions in toluene of 200 grams (11.8 mmol.) of PPE and 2 grams of phase transfer catalyst. The mixtures were vigorously stirred for 1 hour, after which the polymers were precipitated with methanol, filtered and dried.

The results are given in Table I, in comparison with various controls. In Control 1, no water or phase transfer catalyst was employed; in Controls 2-4, no water was employed; and in Control 5, 41 grams of water but no phase transfer catalyst was present.

**TABLE I**

| Example | Toluene in PPE soln., ml. | Ratio of equivs. | | Percent capped (NMR) |
|---|---|---|---|---|
| | | MGCC:PPE | DMBA:PPE | |
| 1 | 1000 | 1.85 | 1.45 | 52 |
| 2 | 550 | 2.04 | 3.0 | 76 |
| 3 | 550 | 2.04 | 3.0 | 81 |
| 4 | 550 | 2.04 | 3.0 | 71 |
| Control 1 | 550 | 2.04 | 1.5 | 10 |
| Control 2 | 550 | 2.04 | 1.5 | 7 |
| Control 3 | 550 | 2.04 | 3.0 | 6 |
| Control 4 | 550 | 4.08 | 3.0 | 18 |
| Control 5 | 550 | 2.04 | 1.5 | 10 |

It is apparent that the degree of capping is substantially higher according to the method of this invention than when no water and/or no phase transfer catalyst is employed.

### Examples 5-16

The procedure of Example 2 was repeated, substituting various amines for the DMBA in a ratio of equivalents to PPE of 2:1. The percentages of capped polymer are listed in Table II.

**TABLE II**

| Example | Amine | Percent capped (NMR) |
|---|---|---|
| 5 | Trimethylamine | 69 |
| 6 | Triethylamine | 63 |
| 7 | Tri-n-butylamine | 20 |
| 8 | Diisopropylethylamine | 26 |
| 9 | Di-n-butylmethylamine | 66 |
| 10 | Tetraethylethylenediamine | 65 |
| 11 | Triethanolamine | 37 |
| 12 | Dimethylethanolamine | 35 |
| 13 | Pyridine | 52 |
| 14 | 4-Dimethylaminopyridine | 58 |
| 15 | N-Methylimidazole | 47 |
| 16 | N-Methylmorpholine | 66 |

### Example 17

The procedure of Examples 5-16 was repeated, employing DMBA as the amine and substituting 2-chloro-4,6-diphenoxytriazine for the MGCC. The product was 72% capped (FTIR).

### Example 18

The procedure of Examples 5-16 was repeated, employing DMBA as the amine and substituting 2-chloro-4,6-bis(2,4,6-trimethylphenoxy)triazine for the MGCC. The product was 92% capped (FTIR).

### Example 19

A solution of 200 grams of PPE and 2 grams of phase transfer catalyst in 962 ml. of toluene was combined with 77 grams of water and PMCC in a ratio of equivalents to PPE of 2:1. DMBA was added at 70-75°C in a ratio of equivalents to PPE of 2:1, and the mixture was stirred under nitrogen for 30 minutes. The product was isolated as described in Example 1; percent capping was 82% (FTIR) and 90% (NMR).

### Example 20

The procedure of Example 19 was repeated, employing a ratio of equivalents of PMCC to PPE of 1.5:1. Percent capping was 73% (FTIR) and 77% (NMR).

### Example 21

The procedure of Example 1 was repeated except that 100 grams of PPE, 400 ml. of toluene, 0.5 gram of phase transfer catalyst, 37 grams of water and DMBA in a ratio of equivalents to PPE of 2:1 were employed, and the MGCC was replaced by PMCC in a ratio of equivalents to PPE of 2:1. The percent capping was 90% (NMR).

### Example 22

The PPE employed was in the form of a stream obtained directly from the synthesis facility as a solution in toluene containing 29.3% solids (i.e., PPE), 4.1% water, 0.32% DMBA and about 0.1% phase transfer catalyst. A portion thereof containing 125 grams of PPE was combined at 75°C with 1.25 grams of additional phase transfer catalyst, 35 grams of additional water and MGCC in a ratio of equivalents to PPE of 2:1. The mixture was stirred for 30 minutes and worked up as described in Example 1. The percent capping was 89% (FTIR) and 61% (NMR).

### Example 23

The procedure of Example 22 was repeated, except that no additional water and phase transfer catalyst were added. The percent capping was 49% (FTIR) and 26% (NMR).

### Example 24

A PPE synthesis stream was employed which contained 35% solids (PPE having an intrinsic viscosity of 0.37 and having 0.09% non-hydrogen bonded hydroxy end groups), 3.9% water, 0.35% DMBA and about 0.1% phase transfer catalyst. A portion thereof containing 355.6 grams of PPE was combined at 70°C with 1.78 grams of additional phase transfer catalyst, 61 ml. of additional water and PMCC in a ratio of equivalents to PPE of 1.85:1. Upon workup as in Example 1, a product was obtained in which the percent capping was 73% (FTIR) and 80% (NMR).

### Example 25

There were combined, at 65°C, 51.43 kg. of the synthesis stream of Example 24, 0.18 kg. of phase transfer catalyst, 3.3 liters of water and an additional 14 grams of DMBA. The mixture was stirred for 30 minutes and there was added 3.693 liters of a 0.52 M solution of PMCC in toluene. Samples were taken for analysis at 1 minute, 20 minutes, 40 minutes and 1 hour. After 1 hour of stirring, the product was worked up as in Example 1 and was shown to be 98% capped (NMR). The percentage capping after 1 minute was 91%, and after 20 minutes was 96%.

### Example 26

A procedure similar to that of Example 25 was employed, except that all the DMBA was replaced by methyldi-n-octylamine. The approximate percentage capping after 45 minutes was 33%. In a similar experiment employing tri-n-octylamine, no capping was observed.

## Claims

1. A method for preparing a reactive triazine-capped polymer which comprises contacting, under reactive conditions, at least one hydroxy group-containing aromatic polymer with at least one chlorotriazine containing reactive groups in the presence of water, a substantially non-polar organic liquid, a reaction-promoting amount of a phase transfer catalyst and at least one tertiary amine selected from the group consisting of:
(A) nitrogen-heterocyclic aromatic and bicycloaliphatic amines;
(B) trialkylamines of the formula 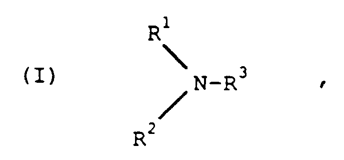 wherein R¹ is an unsubstituted or substituted C₁₋₆ primary alkyl radical, R² is an unsubstituted or substituted C₁₋₁₀ alkyl radical and R³ is an unsubstituted or substituted C₁₋₁₀ primary or secondary alkyl radical; and
(C) heterocyclic amines of the formula 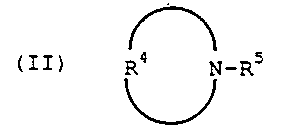 wherein R⁴ is a divalent aliphatic hydrocarbon or aza- or oxahydrocarbon radical and R⁵ is an unsubstituted or substituted C₁₋₆ primary or secondary alkyl radical;
the amount of water employed, based on aromatic polymer, being 2-30% by weight.

2. A method according to claim 1 wherein the chlorotriazine has the formula 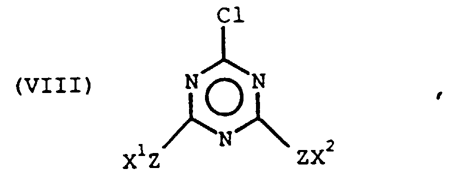 wherein Z is oxygen or sulfur, X¹ is alkyl, cycloalkyl or an aromatic radical, X² is an aromatic radical or a glycidyl group or a group having the formula 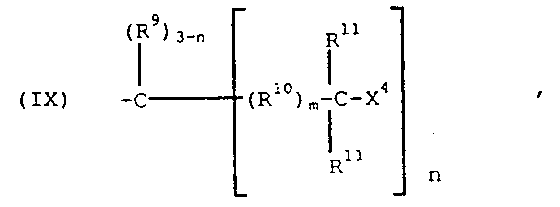 wherein X⁴ is chlorine, bromine or has the formula 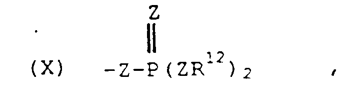 wherein Z is as previously defined and each R¹² is a C₁₋₃₀ primary or secondary alkyl, cycloalkyl, aromatic or aralkyl radical or both R¹² radicals together with the P and Z atoms form a cyclic structure; each R⁹ is independently hydrogen, C₁₋₄ primary or secondary alkyl; R¹⁰ is a C₁₋₃ alkylene radical which is unsubstituted or is substituted with moieties selected from the group consisting of C₁₋₄ primary and secondary alkyl radicals; each R¹¹ is independently R⁹ or X⁴; m is 0 or 1 and n is 1-3.

3. A method according to Claim 1 or Claim 2 wherein the amine is a trialkylamine of formula 1.

4. A method according to any one of Claims 1 to 3 wherein the organic liquid is an aromatic hydrocarbon.

5. A method according to any preceding claim wherein the phase transfer catalyst is a tetraalkylammonium chloride wherein at least two alkyl groups per molecule contain 4-20 carbon atoms.

6. A method according to any preceding claim wherein the reaction temperature is in the range of 20-100°C.

7. A method according to any preceding claim wherein the proportion of amine employed is 1.5-3.5 equivalents per equivalent of aromatic polymer.

8. A method according to any preceding claim wherein the proportion of chlorotriazine employed is 1.5-4.25 equivalents per equivalent of aromatic polymer.

9. A method according to any preceding claim wherein Z is oxygen, X¹ an aromatic radical and X² is a glycidyl group or a group having the formula 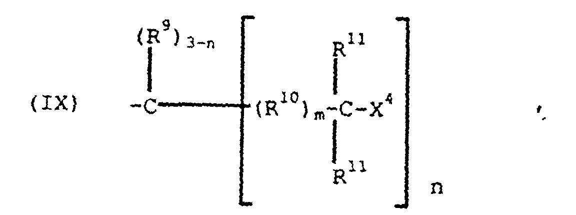 wherein X⁴ is chlorine, bromine or has the formula 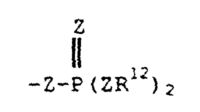 wherein each R¹² is a C₁₋₃₀ primary or secondary alkyl, cycloalkyl, aromatic or aralkyl radical or both R¹² radicals together with the P and Z atoms from a cyclic structure; each R⁹ is independently hydrogen, C₁₋₄ primary or secondary alkyl; R¹⁰ is a C₁₋₃ alkylene radical which is unsubstituted or is substituted with moieties selected from the group consisting of C₁₋₄ primary and secondary alkyl radicals; each R¹¹ is independently R⁹ or X⁴; m is 0 or 1 and n is 1-3.

10. A method according to any preceding claim wherein the chlorotriazine is 2-chloro-4-(2,4,6-trimethylphenoxy)-6-glycidoxy-1,3,5-triazine, 2-chloro-4-(2,6-xylenoxy)-6-glycidoxy-1,3,5-triazine, 2-chloro-4-(2-diethylphosphatoethoxy)-6-(2,4,6-trimethylphenoxy)-1,3,5-triazine, 2-chloro-4-(2-di-n-butylphosphatoethoxy)-6-(2,4,6-trimthylphenoxy)-1,3,5-triazine or 2-chloro-4-(2-di-n-butylphosphatoethoxy)-6-(2,6-xylenoxy)-1,3,5-triazine.

11. A method according to any preceding claim wherein the aromatic polymer is a polyphenylene ether.

12. A method according to any preceding claim wherein the amine is dimethyl-n-butylamine.

13. A method according to Claim 11 wherein the polyphenylene ether is a poly(2,6-dimthyl-1,4-phenylene ether).

## Patentansprüche

1. Verfahren zur Herstellung eines reaktionsfähigen Triazin-verkappten Polymeren, welches umfaßt: das In-Kontakt-bringen unter reaktiven Bedingungen von wenigstens einem Hydroxygruppen-haltigen aromatischen Polymeren mit wenigstens einer Chlortriazin enthaltenden reaktionsfähigen Gruppe in Anwesenheit von Wasser, einer im wesentlichen nicht-polaren organischen Flüssigkeit, einer reaktionsbeschleunigenden Menge eines Phasenübergangskatalysators und wenigstens einem tertiären Amin, ausgewählt aus der Gruppe bestehend aus:
(A) stickstoffhaltigen heterozyklischen aromatischen und bicycloaliphatischen Aminen;
(B) Trialkylaminen der Formel 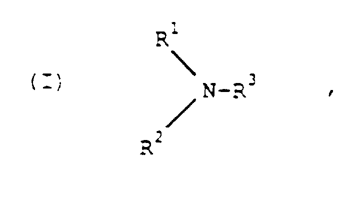 worin R¹ ein unsubstituierter oder substituierter C₁₋₆ primärer Alkylrest ist, R² ein unsubstituierter oder substituierter C₁₋₁₀ Alkylrest und R³ ein unsubstituierter oder substituierter C₁₋₁₀ primärer oder sekundärer Alkylrest ist; und
(C) heterozyklischen Aminen der Formel 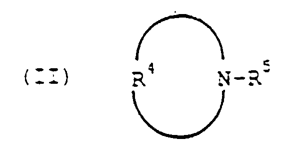 worin R⁴ ein zweiwertiger aliphatischer Kohlenwasserstoff oder Aza- oder Oxahydro-Kohlenstoffrest und R⁵ ein unsubstituierter oder substituierter C₁₋₆ primärer oder sekundärer Alkylrest ist;
die Menge des verwendeten Wassers, bezogen auf das aromatische Polymer, 2 - 30 Gew.-Prozent ist.

2. Verfahren nach Anspruch 1, worin das Chlortriazin die Formel 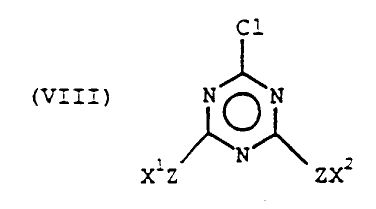 aufweist, worin Z Sauerstoff oder Schwefel ist, X¹ Alkyl, Cycloalkyl oder ein aromatischer Rest ist, X² ein aromatischer Rest oder eine Glycidylgruppe oder eine Gruppe mit der Formel 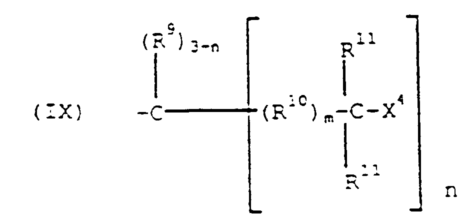 ist, worin X⁴ Chlor, Brom oder die Formel 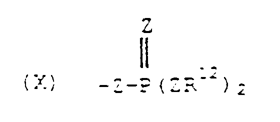 hat, worin Z die vorstehend gegebene Definition besitzt und jedes R¹² ein C₁₋₃₀ primäres oder sekundäres Alkyl, Cycloalkyl, aromatischer oder Alkylrest ist oder beide R¹² Reste zusammen mit den P- und Z-Atomen eine zyklische Struktur bilden; jedes R⁹ unabhängig Wasserstoff, Z₁₋₄ primäres oder sekundäres Alkyl ist; R¹⁰ ein C₁₋₃ Alkylenrest ist, der ungesättigt ist oder substituiert ist mit Anteilen, die ausgewählt sind aus der Gruppe bestehend aus C₁₋₄ primären und sekundären Alkylresten; jedes R¹¹ unabhängig R⁹ oder X⁴ ist; m 0 oder 1 ist und n 1 - 3 darstellt.

3. Verfahren nach Anspruch 1 oder Anspruch 2, worin das Amin ein Trialkylamin mit der Formel 1 ist.

4. Verfahren nach einem der Ansprüche 1 bis 3, worin die organische Flüssigkeit ein aromatischer Kohlenwasserstoff ist.

5. Verfahren nach einem der vorhergehenden Ansprüche, worin der Phasenübergangskatalysator ein Tetraalkylammoniumchlorid ist, worin wenigstens zwei Alkylgruppen pro Molekül 4 - 20 Kohlenstoffatome enthalten.

6. Verfahren nach einem der vorhergehenden Ansprüche, worin die Reaktionstemperatur im Bereich von 20 - 100°C liegt.

7. Verfahren nach einem der vorhergehenden Ansprüche, worin der Anteil des verwendeten Amins 1,5 - 3,5 Äquivalente pro Äquivalent des aromatischen Polymeren beträgt.

8. Verfahren nach einem der vorhergehenden Ansprüche, worin der Anteil des verwendeten Chlortriazins 1,5 - 4,25 Äquivalente pro Äquivalent des aromatischen Polymeren beträgt.

9. Verfahren nach einem der vorhergehenden Ansprüche, worin Z Sauerstoff ist, X¹ ein aromatischer Rest ist und X² eine Glycidylgruppe oder eine Gruppe mit der Formel 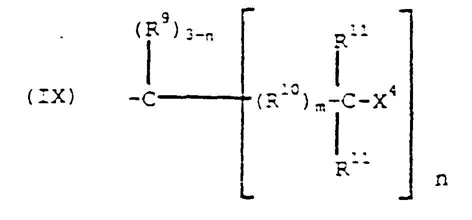 ist, worin X⁴ Chlor, Brom oder die Formel 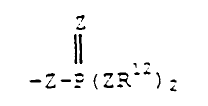 hat, worin jedes R¹² ein C₁₋₃₀ primäres oder sekundäres Alkyl, Cycloalkyl, aromatischer oder Aralkylrest ist oder beide R¹² Reste zusammen mit den P- und Z-Atomen eine zyklische Struktur bilden; jedes R⁹ unabhängig Wasserstoff ist, C₁₋₄ primäres oder sekundäres Alkyl ist; R¹⁰ ein C₁₋₃ Alkylenrest ist, der unsubstituiert oder substituiert ist mit Anteilen, die ausgewählt sind aus der Gruppe bestehend aus C₁₋₄ primären und sekundärenAlkylresten;jedes R¹¹ unabhängig R⁹ oder X⁴ ist; m 0 oder 1 ist und n 1 - 3 ist.

10. Verfahren nach einem der vorhergehenden Ansprüche, worin das Chlortriazin 2-Chlor-4-(2,4,6-trimethylphenoxy)-6-glycidoxy-1,3,5-triazin, 2-Chlor-4-(2,6-xylenoxy)-6-glycidoxy-1,3,5-triazin, 2-Chlor-4-(2-diethylphosphatoethoxy)-6-(2,4,6-trimethylphenoxy)-1,3,5-triazin, 2-Chlor-4-(2-di-n-butylphosphatetInoxyi-6-(2,4,6-trimethylphenoxy)-1,3,5-triazin oder 2-Chlor-4-(2-di-n-butylphosphatethoxy)-6-(2,6-xylenoxy)-1,3,5-triazin ist.

11. Verfahren nach einem der vorhergehenden Ansprüche, worin das aromatische Polymer ein Polyphenylenäther ist.

12. Verfahren nach einem der vorhergehenden Ansprüche, worin das Amin Dimethyl-n-butylamin ist.

13. Verfahren nach Anspruch 11, worin der Polyphenylenäther ein Poly(2,6-dimethyl-1,4-phenylenäther) ist.

## Revendications

1. Procédé de préparation d'un polymère coiffé par une triazine réactive, qui comprend la mise en contact, dans des conditions de réaction, d'au moins un polymère aromatique contenant un groupe hydroxyle avec au moins une chlorotriazine contenant des groupes réactifs, en présence d'eau, d'un liquide organique pratiquement non polaire, d'une quantité favorisant la réaction d'un catalyseur de transfert de phase et d'au moins une amine tertiaire choisie dans le groupe constitué de :
(A) les amines hétérocycliques, aromatiques ou bicycloaliphatiques, à hétérocycle azoté ;
(B) les trialkylamines de formule : 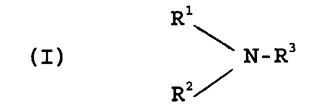 dans laquelle R¹ représente un groupe alkyle primaire en C₁ à C₆, substitué ou non substitué, R² représente un groupe alkyle en C₁ à C₁₀, substitué ou non substitué, et R³ représente un groupe alkyle primaire ou secondaire, en C₁ à C₁₀, substitué ou non substitué ; et
(C) les amines hétérocycliques de formule : 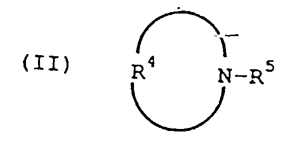 dans laquelle R⁴ représente un groupe hydrocarboné aliphatique divalent ou un groupe aza- ou oxahydrocarboné, et R⁵ représente un groupe alkyle primaire ou secondaire, en C₁ à C₆, substitué ou non substitué ;
la proportion d'eau utilisée représentant 2 à 30 % en poids par rapport au polymère aromatique.

2. Procédé selon la revendication 1, dans lequel la chlorotriazine répond à la formule : 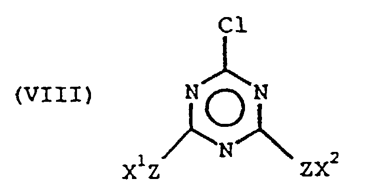 dans laquelle Z représente un atome d'oxygène ou de soufre, X¹ représente un groupe alkyle, cycloalkyle ou aromatique, et X² représente un groupe aromatique, un groupe glycidyle ou un groupe de formule : 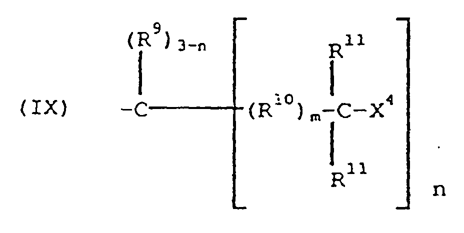 dans laquelle X⁴ représente un atome de chlore ou de brome ou un groupe de formule : 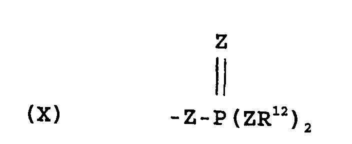 dans laquelle Z est tel que défini précédemment et chaque R¹² représente un groupe alkyle primaire ou secondaire, cycloalkyle, aromatique ou aralkyle, en C₁ à C₃₀, ou bien les deux groupes R¹² forment avec l'atome P et les atomes Z une structure cyclique,
chaque R⁹ représente indépendamment un atome d'hydrogène ou un groupe alkyle primaire ou secondaire en C₁ à C₄, R¹⁰ représente un groupe alkylène en C₁ à C₃, qui est non substitué ou substitué par des substituants choisis parmi les groupes alkyles primaires ou secondaires en C₁ à C₄, chaque R¹¹ représente indépendamment R⁹ ou X⁴, m est égal à 0 ou 1 et n est égal à 1 à 3.

3. Procédé selon la revendication 1 ou 2, dans lequel l'amine est une trialkylamine de formule 1.

4. Procédé selon l'une quelconque des revendications 1 à 3, dans lequel le liquide organique est un hydrocarbure aromatique.

5. Procédé selon l'une quelconque des revendications précédentes, dans lequel le catalyseur de transfert de phase est un chlorure de tétraalkylammonium dans lequel au moins deux groupes alkyles par molécule contiennent 4 à 20 atomes de carbone.

6. Procédé selon l'une quelconque des revendications précédentes, dans lequel la température de réaction est comprise dans l'intervalle allant de 20°C à 100°C.

7. Procédé selon l'une quelconque des revendications précédentes, dans lequel la proportion d'amine utilisée est de 1,5 à 3,5 équivalents par équivalent de polymère aromatique.

8. Procédé selon l'une quelconque des revendications précédentes, dans lequel la proportion de chlorotriazine utilisée est de 1,5 à 4,25 équivalents par équivalent de polymère aromatique.

9. Procédé selon l'une quelconque des revendications précédentes, dans lequel Z représente un atome d'oxygène, X¹ représente un groupe aromatique et X² représente un groupe glycidyle ou un groupe de formule : 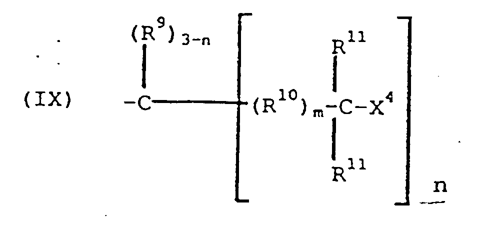 dans laquelle X⁴ représente un atome de chlore ou de brome ou un groupe de formule : 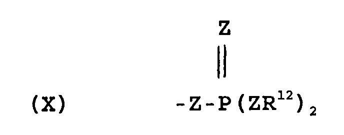 dans laquelle chaque R¹² représente un groupe alkyle primaire ou secondaire, cycloalkyle, aromatique ou aralkyle, en C₁ à C₃₀, ou bien les deux groupes R¹² forment avec l'atome P et les atomes Z une structure cyclique,
chaque R⁹ représente indépendamment un atome d'hydrogène ou un groupe alkyle primaire ou secondaire en C₁ à C₄, R¹⁰ représente un groupe alkylène en C₁ à C₃, qui est non substitué ou substitué par des substituants choisis parmi les groupes alkyles primaires ou secondaires en C₁ à C₄, chaque R¹¹ représente indépendamment R⁹ ou X⁴, m est égal à 0 ou 1 et n est égal à 1 à 3.

10. Procédé selon l'une quelconque des revendications précédentes, dans lequel la chlorotriazine est la 2-chloro-4-(2,4,6-triméthylphénoxy)-6-glycidoxy-1,3,5-triazine, la 2-chloro-4-(2,6-xylénoxy)-6-glycidoxy-1,3,5-triazine, la 2-chloro-4-(2-diéthylphosphatoéthoxy)-6-(2,4,6-triméthylphénoxy)-1,3,5-triazine, la 2-chloro-4-(2-di-n-butylphosphatoéthoxy)-6-(2,4,6-triméthylphénoxy)-1,3,5-triazine, ou la 2-chloro-4- (2-di-n-butylphosphatoéthoxy)-6-(2,6-xylénoxy)-1,3,5-triazine.

11. Procédé selon l'une quelconque des revendications précédentes, dans lequel le polymère aromatique est un poly-(oxyde de phénylène).

12. Procédé selon l'une quelconque des revendications précédentes, dans lequel l'amine est la diméthyl-n-butylamine.

13. Procédé selon la revendication 11, dans lequel le poly(oxyde de phénylène) est un poly(oxyde de 2,6-diméthyl-1,4-phénylène).
